# EUROPEAN PATENT SPECIFICATION

(11) **EP 3 344 584 B1**
(45) Date of publication and mention of the grant of the patent: **30.06.2021**
(21) Application number: 15902698.8
(22) Date of filing: 29.09.2015
(51) Int. Cl.: C02F 3/12, C02F 3/34

(54) **METHOD OF WASTEWATER TREATMENT WITH ZERO DISCHARGE OF SLUDGE**
VERFAHREN ZUR ABWASSERBEHANDLUNG OHNE KLÄRSCHLAMMAUSTRAG
PROCÉDÉ DE TRAITEMENT DES EAUX USÉES AVEC ZÉRO DÉCHARGE DE BOUES

(30) Priority: 01.09.2015 CN 201510552129
(43) Date of publication of application: 11.07.2018
(73) Proprietor: Jiangxi JDL Environmental Protection Co., Ltd., Changleng Overseas Investment Zone (First Zone) Xinjian, Nanchang Jiangxi 330100 (CN)
(72) Inventor: LIAO, Zhimin, Nanchang Jiangxi 330100 (CN); ZHOU, Tao, Nanchang Jiangxi 330100 (CN)
(74) Representative: Lang, Christian
(86) International application number: PCT/CN2015/091143
(87) International publication number: WO 2017/035891

(56) References cited:
- EP-A1- 2 251 307
- WO-A1-00/37369
- CN-A- 101 508 513
- CN-A- 101 885 537
- CN-A- 102 730 914
- CN-A- 104 229 979
- CN-A- 104 829 043
- CN-U- 203 999 107
- CN-U- 205 045 883
- CN-U- 205 061 680
- US-B1- 6 743 362

## Description

### FIELD OF THE INVENTION

The invention relates to the field of the wastewater treatment, and more particularly to a method of wastewater treatment with zero discharge of sludge.

### BACKGROUND OF THE INVENTION

A conventional method for removing silt from the wastewater is mainly dependent on the gravity of the silt. Although substances of large particles are removed, sediments of small particles still exist in the wastewater. The sediments of small particles enter the reaction system and thus cause the obstruction of the filter system. A method using a membrane bioreactor with zero discharge of sludge is known from EP2251307.

### SUMMARY OF THE INVENTION

In view of the above-described problems, it is one objective of the invention to provide a method of wastewater treatment with zero discharge of sludge.

To achieve the above objective, in accordance with the invention, there is provided a method for wastewater treatment with zero discharge of sludge, the method comprising: a) providing a membrane bioreactor system comprising a membrane separation system and a reaction vessel; and b) inoculating silicate-solubilising bacteria into the reaction vessel; c) introducing wastewater and inorganic silt that includes relatively small particles into the reaction vessel, wherein the inorganic silt comprises silica; and d) aerating the membrane separation system and the reaction vessel to control a dissolved oxygen concentration of the wastewater around the membrane separation system to be greater than 0 and smaller than 2 mg/L and the dissolved oxygen concentration of the wastewater in the reaction vessel excluding the membrane separation system to be greater than 0 and smaller than 1 mg/L.

A microbial community comprising silicate-solubilising bacteria is cultivated and acclimatized in the reaction vessel.

A system with zero discharge of sludge for carrying out the invention can comprise: a pretreating system for preliminarily removing solid particles, and a membrane bioreactor system. The membrane bioreactor system comprises: a reaction vessel, a membrane separation system, a water production system, and an aeration system. The reaction vessel comprises silicate-solubilising bacteria. The membrane separation system is disposed in the reaction vessel. The water production system communicates with the membrane separation system for pumping a filtrate out of the membrane separation system. The aeration system is adapted to aerate the reaction vessel and the membrane separation system. The aeration system is configured to control a dissolved oxygen concentration around the membrane separation system to be greater than 0 and smaller than 2 mg/L and the dissolved oxygen concentration in the reaction vessel excluding the membrane separation system to be greater than 0 and smaller than 1 mg/L.

The membrane separation system adopts a micro filtration membrane or an ultrafiltration membrane.

The aeration system adopts microporous aeration, perforated aeration, or a combination thereof.

The membrane separation system is concentratedly scoured by the aeration system.

The pretreating system is a grid for filtering the wastewater.

Compared with the prior art, advantages of the invention are summarized as follows: the method of the invention is adapted to cultivate and acclimate the microbial community comprising the silicate-solubilising bacteria that are able to remove multiple pollutants. The inorganic silt and organic sludge in the wastewater are gradually decomposed into gas and dissolvable substances in the process of the proliferation and metabolism of the microbes. A primary content of the inorganic silt is silica. As the silicate-solubilising bacteria quickly grows and become predominant in the system in the reaction region, silica is converted into dissolvable silicate ions which are able to penetrate the membrane separation system and is carried away by the water thereby realizing the decomposition of the inorganic silt. The method of the invention can be utilized by combining with other biochemical treatment processes.

### BRIEF DESCRIPTION OF THE DRAWINGS

FIG. **1** is a structure diagram of a wastewater treatment system with zero discharge of sludge; and
FIG. **2** is a structure diagram illustrating aeration scouring of a wastewater treatment system.

### DETAILED DESCRIPTION OF THE EMBODIMENTS

For further illustrating the invention, experiments detailing a method of wastewater treatment with zero discharge of sludge are described hereinbelow combined with the drawings.

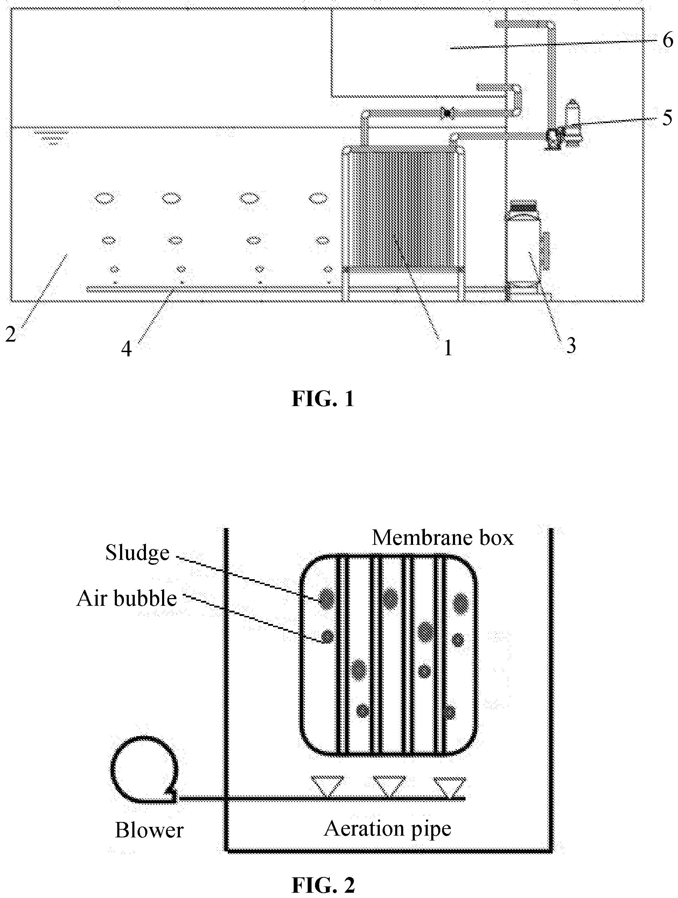

A wastewater treatment system with zero discharge of sludge comprises: a pretreating system for preliminarily removing solid particles and a membrane bioreactor system. The pretreating system, not shown in the figures, adopts a wastewater treatment grid which is well known in the prior art or other pretreating systems. As shown in FIG. **1****,** the membrane bioreactor system comprises: a membrane separation system **1,** a reaction vessel **2,** a blower **3,** an aeration pipe **4,** a water production pump **5,** a clean water pool **6,** and a pipeline. The membrane separation system **1** adopts a microfiltration membrane. The membrane separation system **1** is disposed in the reaction vessel **2.** The water production pump **5** communicates with the membrane separation system **1** via the pipeline for pumping a filtrate from the membrane separation system **1** to the clean water pool **6.** The reaction vessel **2** and the membrane separation system **1** are aerated by the blower **3** via the aeration pipe **4** so as to form a dissolved oxygen concentration gradient in the reaction vessel **2** and meanwhile scour the membrane separation system **1** by aeration.

It can be understood that a microfiltration membrane or other membrane types well known in the prior art is employed by the membrane separation system **1.** The reaction vessel **2** optionally adopts reaction vessels in the prior art, such as a reaction tank. An aeration system is formed by the blower **3** and the aeration pipe **4,** and the aeration system preferably adopts a combination of microporous aeration and perforated aeration. Also, the aeration system can adopts other aeration systems in the prior art. A water production system is formed by the water production pump **5** and the pipe, and the water production system can also adopts other water production system in the prior art, such as a gravity flow type water production system.

As intercepted by the pretreating system, solid particles of relatively large size are preliminarily removed, and inorganic silt including relatively small particles and wastewater are introduced to the membrane bioreactor system. The inorganic silt including the relatively small particles and the organic sludge in the wastewater are intercepted out of the membrane separation system **1** in the reaction vessel **2.** The reaction vessel **2** adopts the combination of the microporous aeration and perforated aeration, and an aeration region is disposed in the vicinity of the membrane assembly. A dissolved oxygen concentration at the membrane assembly is controlled at 1-2 mg/L, and the dissolved oxygen concentration at other regions in the reaction vessel is controlled at 0.5-1 mg/L.

A microbial community comprising silicate-solubilising bacteria is cultivated and acclimatized in the reaction vessel **2** in such aeration condition. The inorganic silt and organic sludge in the wastewater are gradually decomposed into gas and dissolvable substances in the process of the proliferation and metabolism of the microbes. A primary content of the inorganic silt is silica. As the silicate-solubilising bacteria quickly grows and become predominant in the system in the reaction region, silica is converted into dissolvable silicate ions which are able to penetrate the membrane separation system and is carried away by the water thereby realizing the decomposition of the inorganic silt. Silicate-solubilising bacteria is inoculated to the reaction vessel **2.**

The method for wastewater treatment with zero discharge of sludge of the invention is able to fully decompose both the inorganic silt and the organic sludge, so that the zero-discharge of the sludge is realized in the true sense, and the effluent after the treatment meet the standard of reuse of urban recycling water-water quality standard for urban miscellaneous water consumption. The method of the invention can be utilized alone, such as in the conventional sewage treatment, or in a combination with other biochemical treatment process, such as in treatment of highly concentrated organic effluent. The wastewater treatment effect of the method of the invention is not affected when the sludge is artificially discharged.

## Claims

1. A method for wastewater treatment with zero discharge of sludge, the method comprising:
a) providing a membrane bioreactor system comprising a membrane separation system and a reaction vessel;
b) inoculating silicate-solubilising bacteria into the reaction vessel;
c) introducing wastewater and inorganic silt that includes relatively small particles into the reaction vessel, wherein the inorganic silt comprises silica; and
d) aerating the membrane separation system and the reaction vessel to control a dissolved oxygen concentration of the wastewater around the membrane separation system to be greater than 0 and smaller than 2 mg/L and the dissolved oxygen concentration of the wastewater in the reaction vessel excluding the membrane separation system to be greater than 0 and smaller than 1 mg/L.

## Patentansprüche

1. Verfahren zur Abwasserbehandlung ohne Ableitung von Klärschlamm, wobei das Verfahren Folgendes umfasst:
a) Bereitstellen eines Membranbioreaktorsystems, das ein Membranabscheidesystem und einen Reaktionsbehälter umfasst;
b) Einimpfen von silikatsolubilisierenden Bakterien in den Reaktionsbehälter;
c) Einführen von Abwasser und anorganischem Schlamm, die relative kleine Partikel enthalten, in den Reaktionsbehälter, wobei der anorganische Schlamm Kieselsäure umfasst; und
d) Belüften des Membranabscheidesystems und des Reaktionsbehälters, um zu regeln, dass eine gelöste Sauerstoffkonzentration des Abwassers um das Membranabscheidesystem herum mehr als 0 und weniger als 2 mg/L beträgt und die gelöste Sauerstoffkonzentration des Abwassers im Reaktionsbehälter ausschließlich des Membranabscheidesystems mehr als 0 und weniger als 1 mg/L beträgt.

## Revendications

1. Procédé pour le traitement d'eaux usées sans déversement de boue, le procédé comprenant :
a) la mise à disposition d'un système de bioréacteur à membrane, comprenant un système de séparation à membrane et une cuve de réaction ;
b) l'inoculation de bactéries solubilisant le silicate dans la cuve de réaction ;
c) l'introduction d'eaux usées et de limon inorganique incluant des particules relativement petites dans la cuve de réaction, le limon inorganique comprenant du silicate ; et
d) l'aération du système de séparation à membrane et de la cuve de réaction pour commander une concentration d'oxygène dissous des eaux usées autour du système de séparation à membrane de manière à ce que celle-ci soit supérieure à 0 et inférieure à 2 mg/L et la concentration d'oxygène dissous des eaux usées dans la cuve de réaction sans le système de séparation à membrane de manière à ce que celle-ci soit supérieure à 0 et inférieure à 1 mg/L.
